# EUROPÄISCHE PATENTANMELDUNG

(11) **EP 4 524 668 A1**
(43) Veröffentlichungstag der Anmeldung: **19.03.2025**
(21) Anmeldenummer: 24189681.0
(22) Anmeldetag: 19.07.2024
(51) Int. Cl.: G05B 19/418, B65B 57/00, B65B 61/26, G01N 21/17

(54) **QUALITÄTSKONTROLLSYSTEM MIT EINER AUTOMATISIERTEN STICHPROBENBESTIMMUNG SOWIE VERFAHREN**

(30) Priorität: 07.08.2023 DE 102023120898
(71) Anmelder: MULTIVAC Sepp Haggenmüller SE & Co. KG, 87787 Wolfertschwenden (DE)
(72) Erfinder: FACKLER, Sebastian, 87724 Ottobeuren (DE); FISCHER, Klaus, 87776 Sontheim (DE); KIRMSE, Herbert, 87787 Wolfertschwenden (DE); KELLER, Florian, 87749 Hawangen (DE); PATZ, Dominik, 87435 Kempten (DE); WÄGELE, Markus, 87763 Lautrach (DE); EBERHARD, Dominik, 87784 Westerheim (DE)
(74) Vertreter: Grünecker Patent- und Rechtsanwälte PartG mbB

(57) **Zusammenfassung**

Die Erfindung betrifft ein Qualitätskontrollsystem mit einer automatisierten Stichprobenbestimmung für eine laserbasierte Qualitätskontrolle (32) einer in mittels einer Verpackungsmaschine (1, 1') hergestellten Verpackungen (V, T) eingeschlossenen Atmosphäre. Ferner betrifft die Erfindung ein Verfahren zur automatisierten Stichprobenbestimmung von mittels einer Verpackungsmaschine (1, 1') hergestellten Verpackungen (V, T) zum Zwecke einer laserbasierten Qualitätskontrolle (32) einer in den Verpackungen (V, T) eingeschlossenen Atmosphäre.

## Beschreibung

Die vorliegende Erfindung betrifft ein Qualitätskontrollsystem mit einer automatisierten Stichprobenbestimmung von mittels einer modifizierten Atmosphäre hergestellten Verpackungen gemäß Anspruch 1. Ferner betrifft die Erfindung ein Verfahren zur automatisierten Stichprobenbestimmung gemäß Anspruch 15.

WO2023/089094A1 offenbart eine Lasermesseinrichtung zum Messen einer in hergestellten Verpackungen eingeschlossenen Atmosphäre, beispielsweise zum Messen eines in den Verpackungen eingeschlossenen Sauerstoffgehalts. Diese Messung findet anhand der Lasermesseinrichtung insbesondere entlang einer zum Herstellen der Verpackungen konfigurierten Einrichtung, beispielsweise entlang einer Verpackungsmaschine statt.

Die Anschaffungskosten einer derartigen Verpackungsmaschine, das heißt einer Verpackungsmaschine samt Lasermesseinrichtung, sind jedoch sehr hoch. Sofern daher, was in der Praxis oft der Fall ist, beim Kunden mehrere solche Verpackungsmaschinen beziehungsweise Verpackungslinien parallel arbeiten, fallen die Gesamtinvestitionskosten recht hoch aus.

Aufgabe der Erfindung ist es, für eine Verpackungsmaschine ein kostengünstiges, vielseitig einsetzbares und für präzise Messungen geeignetes Qualitätskontrollsystem zur Verfügung zu stellen. Ferner ist es die Aufgabe der Erfindung ein dementsprechendes Verfahren bereitzustellen.

Diese Aufgabe wird gelöst anhand eines Qualitätskontrollsystems nach Anspruch 1 sowie anhand eines Verfahrens nach Anspruch 15.

Vorteilhafte Weiterbildungen der Erfindung sind durch die jeweiligen Unteransprüche gegeben.

Die Erfindung betrifft ein Qualitätskontrollsystem mit einer automatisierten Stichprobenbestimmung für eine laserbasierte Qualitätskontrolle einer in mittels einer Verpackungsmaschine hergestellten Verpackungen eingeschlossenen Atmosphäre. Durch die automatisierte Stichprobenbestimmung ergibt sich die Möglichkeit, dass die laserbasierte Qualitätskontrolle extern, sprich vom Ort der automatisierten Stichprobenbestimmung isoliert, in den Produktionsbetrieb integrierbar ist. In anderen Worten bedeutet dies, dass durch die automatisierte Stichprobenbestimmung die damit bestimmten Stichproben eindeutig identifiziert werden können und somit diese flexibel für die laserbasierte Qualitätskontrolle, d.h. für eine mit teurer Lasermesstechnik durchzuführenden Qualitätskontrolle, an eine andere Stelle transferiert werden können, sprich die laserbasierte Qualitätskontrolle abseits von der die Stichproben produzierenden Verpackungsmaschine stattfinden kann. Dadurch ergibt sich ferner das Potential, dass die laserbasierte Qualitätskontrolle an einer speziell dafür geschaffenen Teststation stattfinden kann, die insbesondere als zentrale Teststation gleich für mehrere Verpackungsmaschinen genutzt werden kann.

Erfindungsgemäß kann demnach die insbesondere entlang der Verpackungsmaschine durchgeführte automatisierte Stichprobenbestimmung dazu genutzt werden, die Stichprobe zu bestimmen damit sich diese einfach bis zur laserbasierten Qualitätskontrolle nachverfolgen lässt. Das Bestimmen der Stichprobe kann anhand einer kostengünstigen Einrichtung geschehen. Die laserbasierte Qualitätskontrolle ist nicht an den Ort der Stichprobenbestimmung gebunden, kann daher von dieser isoliert, insbesondere isoliert von der Verpackungsmaschine, stattfinden und kann für Messzwecke verschiedener Stichprobentypen eingesetzt werden.

Das erfinderische Prinzip beruht insbesondere auf der Systematik, dass die Mittel, die zur automatisierten Stichprobenbestimmung eingesetzt werden, von den für die Qualitätskontrolle eingesetzten laserbasierten Messmitteln örtlich isoliert sind, sodass für ein bestimmtes Packungsformat am Ort der Stichprobenbestimmung relativ kostengünstige Bestimmungsmittel zum Einsatz kommen können, dagegen die für die Qualitätskontrolle eingesetzten kostenintensiveren, laserbasierten Messinstrumente gesondert vorliegen, damit sie extern zur chargenabhängigen Stichprobenbestimmung für verschiedene als Stichproben bestimmte Verpackungstypen genutzt werden können.

Vorzugsweise umfasst das Qualitätskontrollsystem mindestens ein zur automatisierten Stichprobenbestimmung konfiguriertes Kennzeichnungsgerät. Das Kennzeichnungsgerät kann die für die laserbasierte Qualitätskontrolle bestimmte Verpackung derart kennzeichnen, dass sie sich als Stichprobe bis zur laserbasierten Qualitätskontrolle anhand der Kennzeichnung einfach nachverfolgen lässt. Insbesondere ist es denkbar, dass das Kennzeichnungsgerät dazu konfiguriert ist, eine bestimmte Verpackung aus einem vorbestimmten Format, beispielsweise eine Verpackung aus einem 2x2, 3x3 oder 4x4 Format, ggf. pro Maschinenarbeitstakt, zu kennzeichnen.

Eine Variante sieht vor, dass das Kennzeichnungsgerät dazu ausgebildet ist, durch die damit ausgeführte automatisierte Stichprobenkennzeichnung die Stichprobe mit spezifischen Produkt- und/oder Herstellungsdaten, wie zum Beispiel die Verpackungsmaschinennummer, den Programmnamen, die Lage der Stichprobe innerhalb des Formats, bestimmten Maschineneinstellparametern und/oder einer Chargennummer des herzustellenden Produkts zu kennzeichnen und damit eine detaillierte Stichprobenbestimmung zu gewährleisten. Die jeweiligen Daten lassen sich beispielsweise anhand des Kennzeichnungsgeräts mittels eines Strichcodes und/oder QR Codes auf die Stichprobe, beispielsweise eine versiegelte Verpackungsschale, aufbringen.

Eine Variante sieht vor, dass das Kennzeichnungsgerät ein Drucker und/oder ein Etikettierer ist. Derartige Kennzeichnungsgeräte sind kostengünstig herstellbar und lassen sich unter geringem Herstellungsaufwand am Ort der Stichprobenherstellung zum Einsatz bringen, beispielsweise entlang einer Verpackungsmaschine. In diesem Zusammenhang wäre es vorstellbar, dass das für die Stichprobenbestimmung eingesetzte Kennzeichnungsgerät ein bereits an der Verpackungsmaschine zum Kennzeichnen aller damit hergestellter Produkte konfigurierter Drucker und/oder Etikettierer ist. Die relevanten stichprobenbezogenen Daten könnten damit gemeinsam mit anderen mittels des Druckers und/oder Etikettierers auf die Verpackungen aufgebrachten Informationen auf den Stichproben hergestellt werden.

Insbesondere ist das Kennzeichnungsgerät dazu konfiguriert, die Stichprobenbestimmung auf Basis einer Zufallsauswahl, einer systematischen Auswahl und/oder einer willkürlichen Auswahl durchzuführen. Welches Auswahlverfahren für die automatisierte Stichprobenbestimmung vom Kennzeichnungsgerät angewendet wird, kann beispielsweise in Abhängigkeit der herzustellenden Verpackungen, das heißt der zu überprüfenden Produkte, geschehen. Denkbar wäre es zum Beispiel, dass unter Berücksichtigung von festgelegten Regeln und/oder von Erfahrungswerten eine bewusste Stichprobenauswahl aus einem Format, das heißt bewusst eine bestimmte Teilmenge aus einer Grundgesamtheit, für die automatisierte Stichprobenbestimmung angewandt wird. Eine willkürliche Auswahl könnte beispielsweise aus Praktikabilitätsgründen herangezogen werden, beispielsweise im Hinblick auf eine Positionierung des Kennzeichnungsgeräts relativ zur Formatausbildung hergestellter Verpackungen. Für medizinische Verpackungszwecke könnte eine Stichprobenbestimmung gemäß dem Zufallsprinzip geschehen, um bei medizinischen Verpackungen ein besonders repräsentatives Stichprobenergebnis herzustellen.

Gemäß einer Ausführungsform ist das Kennzeichnungsgerät dazu konfiguriert, die für die automatisierte Stichprobenbestimmung ausgewählten Verpackungen, beispielsweise eine Verpackung aus einem 3x3 Format, mit einem Kennzeichen zu versehen, welches auslesbare Daten betreffend die ausgewählten Stichproben aufweist. Die auslesbaren Daten können beispielsweise den Maschinentypen angeben, auf welcher die als Stichprobe bestimmte Verpackung hergestellt wurde, den Programmnamen definieren, die Lage der Stichprobe innerhalb des Formats festlegen, aktuelle Einstellparameter der Verpackungsmaschine angeben, die zur Herstellung der als Stichprobe gekennzeichneten Verpackung führten, und/oder die Chargennummer des Produkts kennzeichnen. Damit ist die derart bestimmte Stichprobe eindeutig zugeordnet und kann sozusagen als Datenträger vom Ort der Stichprobenbestimmung an eine andere, davon entfernte Stelle für weitere Messzwecke, insbesondere die laserbasierte Qualitätskontrolle, weitertransportiert werden.

Dadurch, dass die als Stichprobe gekennzeichnete Verpackung mit Daten, die sich an einem anderen Ort auslesen lassen, versehen wird, ist die automatisierte Stichprobenbestimmung unabhängig vom Ort der laserbestimmten Qualitätskontrolle, insbesondere isoliert von dieser, durchführbar, beispielsweise unmittelbar an einer Verpackungsmaschine. Die für die laserbasierte Qualitätskontrolle konfigurierte Einrichtung kann ein Lesegerät aufweisen, um die bereits auf den Stichproben mit Daten versehenen Kennzeichnung auszulesen und die ausgelesenen Daten mit den Lasermesswerten zu Datenpaketen zu kombinieren.

Eine Variante sieht vor, dass das Qualitätskontrollsystem mindestens eine Teststation aufweist, welcher die mittels der automatisierten Stichprobenbestimmung ausgewählten Verpackungen zuführbar sind. Dabei kann es sich insbesondere um eine Teststation handeln, die als zentrale Teststation von unterschiedlichen Stichprobenbestimmungsorten zur Entgegennahme von mit modifizierter Atmosphäre hergestellten Verpackungen konfiguriert ist. Die Teststation liegt damit als zentrale Einrichtung vor, um aus verschiedenen Verpackungschargen Stichproben entgegenzunehmen, die beispielsweise mittels unterschiedlicher Verpackungsmaschinen hergestellt worden sind.

Die Stichprobenzuführung in die Teststation kann manuell, mittels eines oder mehrerer Zuführbänder und/oder mittels eines oder mehrerer Picker geschehen. Denkbar wäre es, dass dementsprechend eine Rückführung vermessener Stichproben in deren Produktionsfluss stattfindet.

Aus Kostengründen ist es sinnvoll, wenn zumindest diejenigen Qualitätskontrolleinheiten in die Teststation ausgelagert sind, die mit hohem Kostenaufwand verbundenen sind, und die übrigen, jeweiligen für die automatisierte Stichprobenbestimmung eingesetzten Geräte, beispielsweise dafür eingesetzte Kennzeichnungsgeräte, von der Teststation isoliert direkt an einer oder mehreren die Stichproben produzierenden Verpackungsmaschine(n) zum Einsatz kommen.

Vorteilhaft wäre es, wenn die Teststation mindestens eine Lasermesseinrichtung zum Erfassen eines Sauerstoffgehalts und/oder eines Kohlenstoffdioxidgehalts in den stichprobenartig getesteten Verpackungen eingeschlossenen Atmosphäre umfasst. Die Lasermesseinrichtung bietet sich aufgrund ihrer hohen Investitionskosten als Messeinrichtung an, die von mehreren für unterschiedliche Stichproben genutzt wird, um die an den Stichproben angebrachten Kennzeichnungen, insbesondere die auslesbaren Daten, mit ihren Lasermesswerten zu ergänzen.

Eine Variante sieht vor, dass die Lasermesseinrichtung mindestens einen Sender und einen dazu beabstandeten Empfänger aufweist, die derart relativ zu einem Verpackungsunterteil einer zu vermessenden Stichprobe positionierbar sind, dass ein vom Sender ausgegebenes Lasermesssignal vom Sender bis zum Empfänger gegenüberliegende Seitenwände des Verpackungsunterteils und einen dazwischen vom Produkt freigelassenen Freiraum durchläuft, um mittels durch das Verpackungsunterteil geführter Durchlichtmessung den in der Verpackung eingeschlossenen Sauerstoffgehalt und/oder Kohlenstoffdioxidgehalt zu erfassen. Anhand dieser Durchlichtmessung lässt sich der Sauerstoffgehalt und/oder der Kohlenstoffdioxidgehalt präzise und schnell erfassen. Die derart erfassten Werte der Stichproben können zusammen mit den darauf mittels des Kennzeichens bereites hinterlegten Daten, betreffend die Herstellung der Verpackung, beispielsweise Daten für die bei der Herstellung verwendeten Maschinenparameter, zu einem Datenpaket zusammengefasst werden, welches sich beispielsweise für Dokumentationszwecke speichern lässt.

Denkbar wäre es, dass die Lasermesseinrichtung hinsichtlich einer Geometrie der ihr zugeführten, zu vermessenden Verpackungen verstellbar ist. Insbesondere können der Sender und der Empfänger derart zueinander verstellt werden, dass sich dazwischen verschieden groß ausgebildete Verpackungstypen vermessen lassen. Damit lässt sich die Lasermesseinrichtung dynamisch auf unterschiedliche Stichprobentypen kalibrieren. Diese Kalibrierung könnte auf Basis einer Bilderfassung von in die Teststation hineintransportierten Stichproben geschehen.

Vorzugsweise ist die Teststation dazu konfiguriert einen erfassten Sauerstoffgehalt und/oder Kohlenstoffdioxidgehalt jeder getesteten Verpackung mit weiteren Daten der Verpackung, insbesondere mit den Daten des daran vorgesehenen Kennzeichens, als Datenpaket zumindest für Dokumentationszwecke zu speichern. Damit können die die Stichprobe bereits kennzeichnenden Daten durch die innerhalb der Teststation erfassten Messdaten ergänzt bzw. vervollständigt werden.

Im Qualitätskontrollsystem kann die Teststation außer für Dokumentationszwecke auch als Datenverteiler eingesetzt werden. Denkbar wäre es, dass die Teststation dazu konfiguriert ist, Messergebnisse, insbesondere damit komplettierte Datenpakete, an die die jeweiligen Stichproben produzierende Verpackungsmaschine, an ein ERP-System und/oder an eine cloudbasierte Anwendung zu übermitteln. Im erstgenannten Fall, sprich bei einer Übermittlung der Datenpakete von der Teststation an die jeweilige Verpackungsmaschine, lassen sich somit die Stichprobenwerte durch einen Bediener abrufen. Dieser könnte dann dementsprechend, sofern die Stichprobenwerte nicht den vorbestimmten Sollwerten entsprechen, in den Herstellungsprozess eingreifen, indem der Prozessparameter so anpasst, dass sich die gewünschten Verpackungswerte besser erzielen lassen.

Gemäß einer Ausführungsform weist das Qualitätskontrollsystem mindestens eine Verpackungsmaschine oder mindestens eine Verpackungslinie auf, die dazu ausgebildet ist, auf Basis von mittels der Teststation bereitgestellten Daten, insbesondere auf Basis der die Messergebnisse enthaltenen Datenpakete, mindestens einen daran ablaufenden Prozess anzupassen. Damit wird eine Rückführung der die Stichprobe eindeutig kennzeichnenden Daten zur Verpackungsmaschine oder zur Verpackungslinie ermöglicht und dafür eingesetzt, einen daran während des Betriebs ablaufenden Prozess gegebenenfalls anzupassen. Insbesondere kann auf Basis der die Stichprobe kennzeichnenden Daten mindestens ein Prozessparameter eines an der Verpackungsmaschine ablaufenden Evakuierungsvorgangs und/oder eines Begasungsvorgangs angepasst werden. Kritische Daten jeweiliger Stichproben können zusätzlich einem Bediener über eine an der Verpackungsmaschine oder entlang der Verpackungslinie vorliegende Anzeigeeinrichtung signalisiert werden.

Eine Variante sieht vor, dass das Kennzeichnungsgerät in Form eines Etikettierers und/oder Druckers in Produktionsrichtung der Verpackungsmaschine stromabwärts einer Siegelstation positioniert ist oder in Form eines Etikettierers und/oder Druckers stromaufwärts der Siegelstation einer Oberfolientransproteinrichtung zugeordnet ist. Bei diesen zur automatisierten Stichprobenbestimmung eingesetzten Kennzeichnungsgeräten kann es sich um ohnehin an der Verpackungsmaschine vorliegende Einrichtungen handeln, mittels denen die hergestellten Verpackungen in Gänze gekennzeichnet werden, beispielsweise mit einer Gewichtsangabe betreffend das darin aufgenommene Produkt und/oder Daten betreffend den Verfall des eingeschlossenen Produkts.

Insbesondere verfügt das Qualitätskontrollsystem über mehrere parallel arbeitende Verpackungsmaschinen beziehungsweise Verpackungslinien, entlang welchen Verpackungsmaschinen eingesetzt werden. Die entlang dieser parallel arbeitenden Verpackungsmaschinen automatisiert bestimmten Stichproben lassen sich insbesondere auch automatisiert aus den jeweiligen Verpackungsmaschinen ausschleusen und über ein jeweiliges Transportsystem der Teststation zuführen. Für Testzwecke, insbesondere für eine vereinfachte Arbeitsweise der Lasermesseinrichtung, wäre es vorteilhaft, wenn entlang des Förderwegs zur Teststation Gruppen gleichartiger Verpackungstypen gebildet werden, damit die innerhalb einer jeweiligen Gruppe zusammengefassten, gleichartigen Verpackungstypen nacheinander der Teststation zugeführt werden können. Damit ist es möglich, dass zumindest innerhalb einer zu testenden Gruppe von Verpackungen die Messeinrichtung nicht verstellt werden muss.

Denkbar wäre es, dass die Verpackungsmaschine eine Steuereinrichtung aufweist, die dazu konfiguriert ist, auf Basis der ihr mittels der Teststation vorgehaltenen Datenpakete mindestens einen Prozessparameter und/oder einen Programmablauf für einen Evakuierungsvorgang und/oder einen Begasungsvorgang selbststeuernd anzupassen. Damit ist es möglich, den Verpackungsprozess anhand von mittels der Teststation zur Verpackungsmaschine rückgeführter Daten, betreffend die jeweiligen entlang der Verpackungsmaschine gekennzeichneten Stichproben, zu steuern. Die Teststation liegt im Verbund mit der jeweiligen Verpackungsmaschine damit als Qualitätskontroll- und Steuereinrichtung für den Herstellungsprozess vor.

Vorteilhaft ist es, wenn die Verpackungsmaschine eine Steuereinrichtung aufweist, die dazu ausgebildet ist, auf Basis der ihr mittels der Teststation übermittelten Datenpakete ein Intervall für eine Stichprobenbestimmung zu variieren. Denkbar ist es, dass sich das Intervall zur Stichprobenentnahme bzw. Stichprobenbestimmung dynamisch an der Verpackungsmaschine beziehungsweise entlang der die Verpackungsmaschine aufweisenden Verpackungslinie anpassen lässt. Liegen stichprobenbezogene Daten, insbesondere deren laserbasierte Messwerte, in einem kritischen Bereich vor, beispielsweise nahe an vordefinierten Toleranzgrenzen, kann der dafür verantwortlichen Verpackungsmaschine anhand der Teststation, insbesondere über das zentrale ERP-System und/oder über eine cloudbasierte Anwendung, vorgegeben werden, dass die Stichprobenentnahme öfters stattfinden soll. Dementsprechend lässt sich das Intervall der Stichprobenentnahme an der Verpackungsmaschine erhöhen. Liegen dagegen die Messwerte beziehungsweise stichprobenbezogenen Daten innerhalb eines sollwertigen Bereichs, kann das Stichprobenentnahmeintervall wieder zeitlich vergrößert werden, sodass es zu einem verringerten Aufwand zur automatisierten Stichprobenbestimmung an der Verpackungsmaschine kommen kann. Ein Sonderfall könnte dadurch vorliegen, dass innerhalb der Teststation Messwerte erfasst werden, die jenseits vorgegebener Toleranzgrenzwerte liegen, wobei anhand diesbezüglich, an die Verpackungsmaschine rückgeführter Daten, dieser signalisierbar ist, dass sie ihren Betrieb stoppen soll. Dies hätte einen direkten Maschinenstopp zur Folge.

Eine Variante sieht vor, dass die Teststation über eine drahtlose Schnittstelle mit der Verpackungsmaschine verbunden ist. Über diese Schnittstelle kann die Teststation an die Verpackungsmaschine kommunizieren, welche Verpackung getestet werden muss, damit eine Manipulation ausgeschlossen werden kann. Anhand der Teststation kann insbesondere ein zur automatisierten Stichprobenbestimmung eingesetztes Programm für die Verpackungsmaschine ausgewählt werden, welches mittels der Verpackungsmaschine durchgeführt werden soll, beispielsweise ein Programm für variierende Intervalle der Stichprobenbestimmung.

Gemäß einer Ausführungsform weist die Verpackungsmaschine eine Ausschleusvorrichtung auf, mittels welcher die gekennzeichneten Stichproben aus einem Produktionsfluss hergestellter Verpackungen für Testzwecke separierbar sind. Diese Ausschleusvorrichtung kann mit einer anderen Ausschleusvorrichtung einer weiteren Verpackungsmaschine derart zusammenlaufen, dass die von diesen im Qualitätskontrollsystem eingebundenen Verpackungsmaschinen bereitgestellten Stichproben gemeinsam zur Teststation weitertransportiert werden. Denkbar wäre es, dass die innerhalb der Teststation vermessenen Stichproben mittels einer Rückführeinrichtung in den jeweiligen Produktionsfluss der Verpackungsmaschinen zurückgeführt werden. Auch dafür kann es von Vorteil sein, wenn die der Teststation zugeführten Stichproben diese in gleichartigen Gruppen verlassen, um über die Rückführeinrichtung gruppenweise an die jeweiligen Verpackungsmaschinen zurücktransportiert und daran in den Produktionsfluss wieder eingeschleust zu werden.

Ferner bezieht sich die Erfindung auf ein Verfahren zur automatisierten Bestimmung von mittels einer Verpackungsmaschine hergestellten Verpackungen zum Zwecke einer laserbasierten Qualitätskontrolle einer in Verpackungen eingeschlossenen Atmosphäre. Damit ist es insbesondere möglich, die automatisierte Stichprobenbestimmung und die laserbasierte Qualitätskontrolle an unterschiedlichen Orten durchzuführen, sprich mittels gesonderter Einrichtungen.

Beispielsweise kann die automatisierte Stichprobenbestimmung mittels eines dafür geeigneten Geräts, beispielsweise mittels eines Kennzeichnungsgeräts unmittelbar an einer Verpackungsmaschine, durchgeführt werden. Die laserbasierte Qualitätskontrolle kann dagegen an einem von der Verpackungsmaschine entfernten Ort, beispielsweise innerhalb einer gesondert ausgebildeten Teststation, ausgeführt werden. Damit kann die Verpackungsmaschine zur automatisierten Stichprobenbestimmung kostengünstig hergestellt werden. Die für die laserbasierte Qualitätskontrolle konfigurierte Einrichtung, beispielsweise die gesondert von der Verpackungsmaschine eingesetzte Teststation, kann dagegen als eigenständige Einheit gemeinsam von mehreren Verpackungsmaschinen genutzt werden, damit daran von den Verpackungsmaschinen gekennzeichnete Stichproben vermessen werden. Eine dafür eingesetzte kostenintensive Lasermesseinrichtung kann damit von mehreren Verpackungsmaschinen kostengünstig genutzt werden.

Insbesondere werden an der Verpackungsmaschine im Durchlauf als Stichproben gekennzeichnete Verpackungen einer gesondert von der Verpackungsmaschine ausgebildeten Teststation zugeführt, innerhalb welcher die laserbasierte Qualitätskontrolle durchgeführt wird, wobei die damit erzielbaren Messergebnisse, beispielsweise ein erfasster Sauerstoffgehalt und/oder ein erfasster Kohlendioxidgehalt, zusammen mit bereits zur Stichprobenkennzeichung an der jeweiligen Stichprobe vorliegenden auslesbaren Daten zu Datenpaketen zusammengefasst und für Steuerzwecke der Verpackungsmaschine gemeldet werden.

Durch das erfindungsgemäß Verfahren ist es möglich, dass relevante Daten betreffend das hergestellte Produkt, sprich die mit modifizierter Atmosphäre hergestellte Verpackung und/oder speziell dafür bei der Herstellung eingesetzte Maschinenparameter anhand der automatisierten Stichprobenbestimmung mittels Kennzeichnung auf dem jeweiligen Produkt, sprich der jeweiligen Verpackung, angebracht werden. Die Verpackung dient im weiteren Transport hin zu der laserbasierten Qualitätskontrolle als Datenträger, der sich in der von der Stichprobenbestimmung entfernten Teststation auslesen lässt. Die ausgelesenen Daten der Stichprobe können zusammen mit den laserbasierten Messdaten zu einem Datenpaket zusammengefasst werden. Dieses wird für Dokumentationszwecke gespeichert und/oder wird der Verpackungsmaschine zum Steuern daran ablaufender Prozesse zurückgeführt. Über diese Rückführung von Stichprobendaten lässt sich der Betrieb der Verpackungsmaschine, insbesondere das daran ablaufende Programm zur Stichprobenbestimmung, auf Basis der die Stichprobe kennzeichnenden Werte selbststeuernd, in dynamischer Art und Weise regeln. Die hohen Investitionskosten für die Teststation lassen sich auf mehrere Verpackungsmaschinen verteilen, sodass insgesamt in einer Produktion mit mehreren Verpackungsmaschinen ein relativ geringer Investitionsaufwand entsteht.

Die Erfindung wird anhand von in den Figuren gezeigten Ausführungsformen genauer erläutert. Es zeigen:
- Figur 1: eine Verpackungsmaschine in Form einer Tiefziehverpackungsmaschine in schematischer Seitenansicht,
- Figur 2: eine perspektivische Darstellung einer Verpackungsmaschine in Form einer Tiefziehverpackungsmaschine,
- Figur 3: eine Verpackungsmaschine in Form einer Schalenverschließmaschine in Seitenansicht,
- Figur 4: eine für Testzwecke gekennzeichnete Verpackung als Stichprobe, und
- Figur 5: ein Qualitätskontrollsystem mit mehreren darin eingebundenen Verpackungsmaschinen.

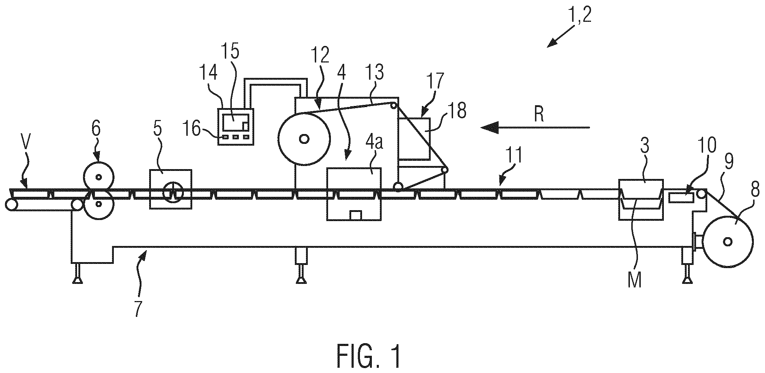

Gleiche technische Merkmale sind in den Figuren mit denselben Bezugszeichen versehen. Figur 1 zeigt eine Verpackungsmaschine 1, die in Form einer Tiefziehverpackungsmaschine 2 konfiguriert ist. Diese Tiefziehverpackungsmaschine 2 weist eine Formstation 3, eine Siegelstation 4, eine Querschneideeinrichtung 5 und eine Längsschneideeinrichtung 6 auf, die in dieser Reihenfolge in einer Produktionsrichtung R an einem Maschinengestell 7 angeordnet sind. Eingangsseitig befindet sich an dem Maschinengestell 7 eine Zufuhrrolle 8, von der eine Unterfolie 9 abgezogen wird. Ferner weist die Tiefziehverpackungsmaschine 2 eine Transportkette 10, insbesondere beidseitig angeordnete Transportketten beziehungsweise Klammerketten 10, auf, die die Unterfolie 9 ergreift und diese pro Hauptarbeitstakt in der Produktionsrichtung R weitertransportiert.

In der dargestellten Ausführungsform ist die Formstation 3 als eine Tiefziehstation ausgebildet, bei der in die Unterfolie 9 durch Tiefziehen, beispielsweise mittels Druckluft und/oder Vakuum Mulden M geformt werden. Dabei kann die Formstation 3 derart ausgebildet sein, dass in der Richtung senkrecht zur Produktionsrichtung R mehrere Mulden M nebeneinander gebildet werden, beispielsweis entlang der Tiefziehverpackungsmaschine 2 in vier nebeneinanderliegenden Spuren Mulden M hergestellt werden. In Produktionsrichtung R hinter der Formstation 3 ist eine Einfüllstrecke 11 vorgesehen, in der die in der Unterfolie 9 geformten Mulden M mit Produkt befüllt werden.

Die Siegelstation 4 verfügt über eine hermetisch verschließbare Kammer 4a, in der die Atmosphäre in den Mulden M vor dem Versiegeln mit der von einer Oberfolienaufnahme 12 abgegebenen Oberfolie 13 zum Beispiel durch einen Evakuierungsvorgang und/oder durch Gasspülen durch ein Austauschgas oder ein Gasgemisch ersetzt werden kann.

Die Querschneideeinrichtung 5 kann als Stanze ausgebildet sein, die die Unterfolie 9 und die Oberfolie 13 in einer Richtung quer zur Produktionsrichtung R zwischen benachbarten Mulden M durchtrennt. Dabei arbeitet die Querschneideeinrichtung 5 derart, dass die Unterfolie 9 nicht über die gesamte Breite aufgetrennt, sondern zumindest in einem Randbereich nicht durchtrennt wird. Dies ermöglicht einen kontrollierten Weitertransport durch die Transportkette 10.

Die Längsschneideeinrichtung 6 kann als eine Messeranordnung ausgebildet sein, mit der die Unterfolie 9 und die Oberfolie 13 zwischen benachbarten Mulden M und am seitlichen Rand der Unterfolie 9 in der Produktionsrichtung R durchtrennt werden, sodass hinter der Längsschneideeinrichtung 6 vereinzelte Verpackungen V vorliegen.

Weiter zeigt Figur 1, dass die Tiefziehverpackungsmaschine 2 eine Steuereinrichtung 14 aufweist. Die Steuereinrichtung 14 hat die Aufgabe, die an der Tiefziehverpackungsmaschine 2 ablaufenden Prozesse zu steuern und zu überwachen. Die Steuereinrichtung 14 dient als Benutzerschnittstelle für einen Bediener, mittels welcher der Bediener Prozessparameter für die jeweiligen Arbeitsstationen an der Tiefziehverpackungsmaschine 2 einstellen kann, beispielsweise Prozessparameter für einen innerhalb der Kammer 4a ablaufenden Evakuierungsvorgang und/oder Begasungsvorgang, um innerhalb der versiegelten Verpackungen eine gewünschte, modifizierte Atmosphäre herzustellen. Der Bediener kann beispielsweise an der Steuereinrichtung 14 die gewünschten Prozessparameter mittels eines daran ausgebildeten Touch-Displays 15 und/oder über gesonderte Bedienelemente 16 eingeben.

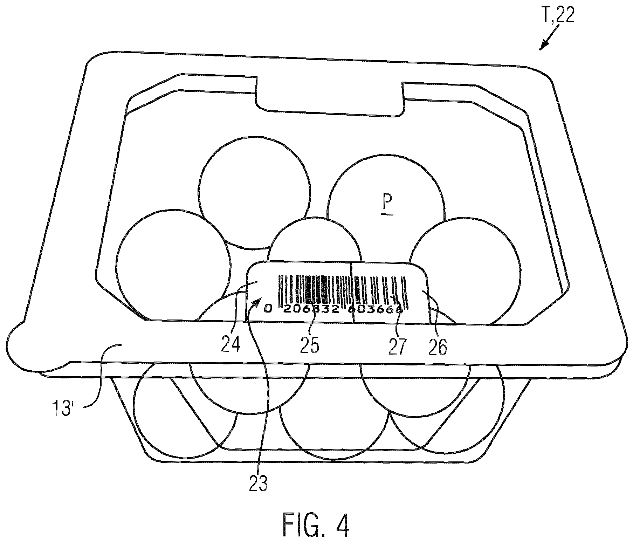

Die Tiefziehverpackungsmaschine 2 aus Figur 1 verfügt ferner über ein Kennzeichnungsgerät 17, anhand dessen sich automatisiert Stichproben aus der Vielzahl der hergestellten Verpackungen V bestimmen lassen. Das Kennzeichnungsgerät 17 aus Figur 1 kann als Drucker und/oder Etikettierer 18 konfiguriert sein, um automatisiert bestimmte Stichproben mit einem Kennzeichen 23 (siehe Figur 4) zu versehen, welches auslesbare Daten betreffend die ausgewählten Stichproben aufweist.

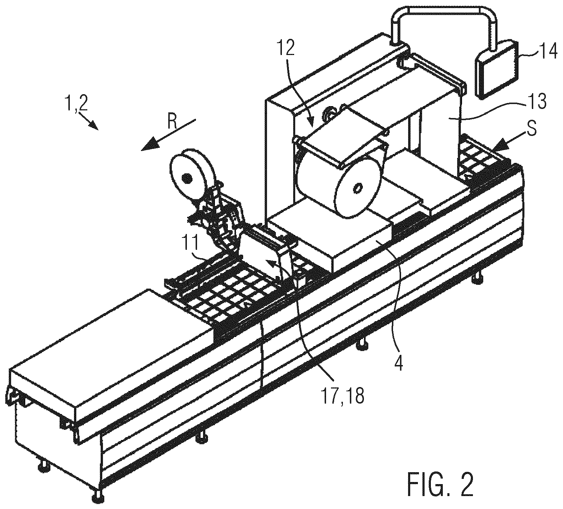

Figur 2 zeigt eine schematische Teilansicht einer Tiefziehverpackungsmaschine 2, an welcher das Kennzeichnungsgerät 17 zur Stichprobenbestimmung anders als in Figur 1 stromabwärts der Siegelstation 4 positioniert ist. Das in Figur 2 gezeigte Kennzeichnungsgerät 17 ist in Form eines Etikettierers 18 konfiguriert, der dazu ausgebildet ist, ihn passierende, versiegelte Verpackungsmulden M mit einem Etikett zu versehen. Ein solches Etikett, sofern es sich um ein Etikett einer bestimmten Stichprobe handelt, kann außer den jeweiligen Daten, die für alle Verpackungen relevant sind, auch noch spezifische, stichprobenrelevante Daten enthalten.

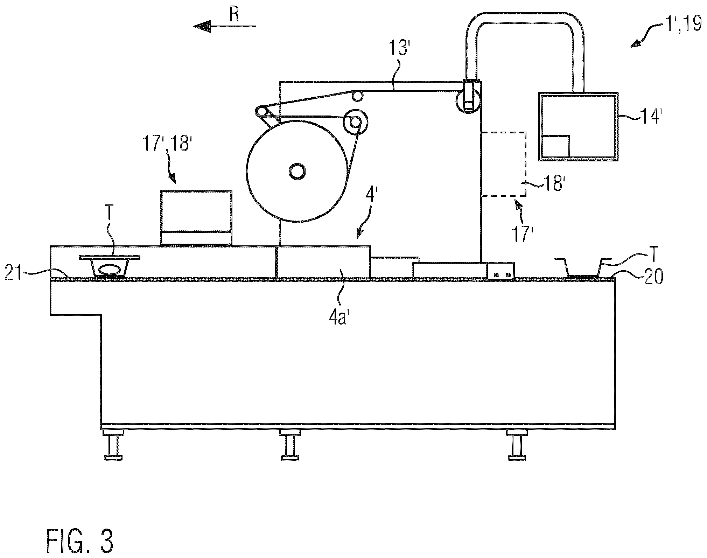

Figur 3 zeigt eine Verpackungsmaschine 1', die in Form einer Schalenverschließmaschine 19 konfiguriert ist. Diese wird in Fachkreisen auch Traysealer genannt. An der Schalenverschließmaschine 19 werden Verpackungsschalen T auf einem Zuführband 20 bereitgestellt. Die Schalenverschließmaschine 19 weist eine Siegelstation 4' auf, die dazu ausgebildet ist, ihr zugeführte Verpackungsschalen T mit einer Oberfolie 13' zu versiegeln. Die Siegelstation 4` kann eine hermetisch abdichtende Kammer 4a' für einen darin stattfindenden Evakuierungsvorgang und/oder Begasungsvorgang ausbilden, um die zugeführten Schalenteile T mit einer modifizierten Atmosphäre zu versiegeln. Stromabwärts der Siegelstation 4' ist ein Kennzeichnungsgerät 17` angeordnet, welches zur automatisierten Stichprobenbestimmung konfiguriert ist. Alternativ dazu könnte das Kennzeichnungsgerät 17` auch stromaufwärts der Siegelstation 4` positioniert sein. Dies ist rein schematisch in Figur 3 dargestellt. Fertig hergestellte Schalenteile T werden von einem Abführband 21 aus der Schalenverschließmaschine 19 heraustransportiert.

Figur 4 zeigt ein als Stichprobe 22 gekennzeichnetes, versiegeltes Schalenteil T. Die Stichprobe 22 weist an der Oberfolie 13' ein Kennzeichen 23 auf, welches über einen ersten Abschnitt 24 verfügt, welcher allgemeine, auslesbare Daten, insbesondere im Hinblick auf das eingeschlossene Produkt P, enthält. Ferner verfügt das Kennzeichen 23 über einen zweiten Abschnitt 26, welcher für die Stichprobe 22 relevante, auslesbare Daten 27 aufweist. Das Kennzeichen 23 liegt in Form eines Etiketts oder in Form eines bedruckten Bereichs auf der Oberfolie 13' vor.

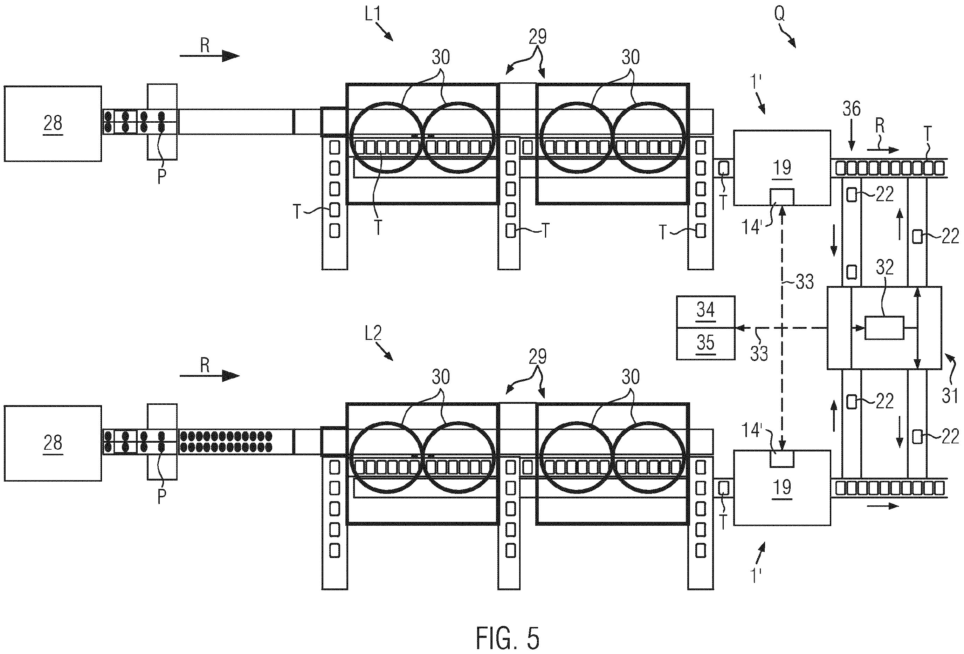

Figur 5 zeigt in schematischer Darstellung ein Qualitätskontrollsystem Q, welches mehrere Verpackungsmaschinen 1' aufweist, die jeweils als Schalenverschließmaschine 19 konfiguriert sind. Die Schalenverschließmaschinen 19 sind in Verpackungslinien L1, L2 integriert und werden dafür eingesetzt, ihnen mit Produkt beladene Schalenteile T zu verschließen. Eingangs der Verpackungslinien L1, L2 ist jeweils eine Schneideeinrichtung 28 positioniert, die dazu ausgebildet sind, ein Produkt P aufzuschneiden. Die geschnittenen Produkte P werden in Produktionsrichtung R stromabwärts Verladestationen 29 zugeführt. Darin nehmen Pickereinrichtungen 30 die zugeführten Produkte P auf und verladen diese in ferner den Verladestationen 29 zugeführte Schalenteile T. Sollgewichtig mit Produkt beladene Schalenteile T werden anschließend von den Verladestationen 29 an die jeweiligen Schalenverschließmaschinen 19 übergeben, welche insbesondere dazu konfiguriert sind, eine modifizierte Atmosphäre in den Schalenteilen T herzustellen und diese zu versiegeln.

An den Schalenverschließmaschinen 19 werden einzelne Stichproben 22 entsprechend gekennzeichnet und aus dem Produktionsfluss hergestellter, versiegelter Verpackungsschalen T quer zur Produktionsrichtung R mittels einer Ausschleusvorrichtung 36 ausgeschleust, um einer zentralen Teststation 31 zugeführt zu werden. Die aus den Verpackungslinien L1, L2 ausgeschleusten jeweiligen Stichproben 22 können der Teststation 31 für eine laserbasierte Qualitätskontrolle 32 zugeführt werden. Anhand der laserbasierten Qualitätskontrolle 32 lässt sich beispielsweise ein Sauerstoffgehalt und/oder ein Kohlenstoffdioxidgehalt in den zugeführten Stichproben 22 messen. Diesbezügliche Daten lassen sich zusammen mit den jeweiligen an den Stichproben 22 bereits versehenen Daten zu einem Datenpaket 33 kombinieren. Von der Teststation 31 aus können diese Datenpakete 33 an die jeweiligen Schalenverschließmaschinen 19, das heißt an die jeweiligen daran vorgesehenen Steuereinrichtungen 14', insbesondere für eine Anpassung des Produktionsbetriebs, rückgeführt werden. Denkbar wäre es auch, dass die jeweiligen Datenpakete 33 nicht nur an die für die Herstellung der Stichprobe 22 eingesetzten Schalenverschließmaschinen 19 rückgeführt werden, sondern auch zusätzlich an ein im Qualitätskontrollsystem Q funktional angebundenes ERP-System 34 und/oder an eine cloudbasierte Anwendung 35 übermittelt werden.

Die mittels der Teststation 31 hergestellten Datenpakete 33 beinhalten Daten, anhand welcher die jeweiligen Steuereinrichtungen 14' den Herstellungsprozess der Schalenverschließmaschinen 19 anpassen können, um beispielsweise bei nicht sollwertig vorliegenden Messwerten eine Korrektur des Herstellungsprozesses, beispielsweise geänderte Prozessparameter für den Evakuierungsvorgang und/oder den Begasungsvorgang, in der jeweiligen Steuereinrichtung 14' zu hinterlegen. Auf Basis der Datenpakete 33 können auch Stichprobenintervalle angepasst werden.

An der in Figur 5 gezeigten Teststation 31 werden die aus unterschiedlichen Produktionsströmen ihr zugeführten Stichproben 22 vermessen und anschließend wieder den jeweiligen Produktionsströmen zugeführt. Dadurch erhaltene Messwerte können Bestandteil der jeweiligen Datenpakete 33 sein die an die jeweiligen Verpackungsmaschinen 1' zurückgesendet werden, sodass die jeweiligen Verpackungsmaschinen 1', sofern erforderlich, ihre jeweiligen Prozesse dementsprechend anpassen können. Somit lässt sich die Teststation 31 für mehrere Verpackungsmaschinen 1' für Testzwecke gekennzeichneter Stichproben 22 verwenden. Auf dem Weg hin zur Teststation 31 können die bereits an den jeweiligen Verpackungsmaschinen 1' gekennzeichneten Stichproben 22 mit stichprobenrelevanten Daten versehen werden und dienen damit bis zur Teststation 31 als Informationsträger, um die Stichproben 22 innerhalb der Teststation 31 zu identifizieren, damit diese anhand der darin durchgeführten Messungen weiter im Detail identifizierbar sind. Damit findet eine eindeutige Identifizierung der jeweiligen Stichproben 22 an unterschiedlichen Stationen statt. Die jeweiligen produzierenden Verpackungsmaschinen 1' verfügen die zur Kennzeichnung verwendeten, kostengünstigen Geräte. Kostenintensive Messinstrumente teilen sich die jeweiligen Verpackungsmaschinen 1', indem diese an der von beiden Verpackungsmaschinen 1' genutzten Teststation 31 untergebracht sind.

## Patentansprüche

1. Qualitätskontrollsystem (Q) mit einer automatisierten Stichprobenbestimmung für eine laserbasierte Qualitätskontrolle (32) einer in mittels einer Verpackungsmaschine (1, 1') hergestellten Verpackungen (V, T) eingeschlossenen Atmosphäre.

2. Qualitätskontrollsystem nach Anspruch 1, **dadurch gekennzeichnet, dass** das Qualitätskontrollsystem (Q) mindestens ein zur automatisierten Stichprobenbestimmung konfiguriertes Kennzeichnungsgerät (17, 17') umfasst.

3. Qualitätskontrollsystem nach Anspruch 2, **dadurch gekennzeichnet, dass** das Kennzeichnungsgerät (17, 17') ein Drucker und/oder ein Etikettierer (18, 18') ist.

4. Qualitätskontrollsystem nach Anspruch 2 oder 3, **dadurch gekennzeichnet, dass** das Kennzeichnungsgerät (17 ,17') dazu konfiguriert ist, die Stichprobenbestimmung auf Basis einer Zufallsauswahl, einer systematischen Auswahl oder einer willkürlichen Auswahl durchzuführen.

5. Qualitätskontrollsystem nach einem der Ansprüche 2 bis 4, **dadurch gekennzeichnet, dass** das Kennzeichnungsgerät (17, 17') dazu konfiguriert ist, die für die automatisierte Stichprobenbestimmung ausgewählten Verpackungen (V) mit einem Kennzeichen (23) zu versehen, welches auslesbare Daten (27) betreffend die ausgewählten Stichproben (22) aufweist.

6. Qualitätskontrollsystem nach einem der Ansprüche 2 bis 5, **dadurch gekennzeichnet, dass** das Kennzeichnungsgerät (17, 17`) dazu konfiguriert ist, aus einem vorbestimmten Packungsformat eine Verpackung (V) als Stichprobe (22) zu kennzeichnen.

7. Qualitätskontrollsystem nach einem der vorangehenden Ansprüche, **dadurch gekennzeichnet, dass** das Qualitätskontrollsystem (Q) mindestens eine Teststation (31) aufweist, welcher die mittels der automatisierten Stichprobenbestimmung ausgewählten Verpackungen (V) zuführbar sind.

8. Qualitätskontrollsystem nach Anspruch 7, **dadurch gekennzeichnet, dass** die Teststation (31) dazu konfiguriert ist, einen erfassten Sauerstoffgehalt und/oder Kohlendioxidgehalt jeder getesteten Stichprobe (22) mit weiteren Daten der Stichprobe (22), insbesondere mit den Daten (27) des daran vorgesehenen Kennzeichens (23), als Datenpaket (33) für Dokumentationszwecke zu speichern.

9. Qualitätskontrollsystem nach Anspruch 7 oder 8, **dadurch gekennzeichnet, dass** die Teststation (31) dazu konfiguriert ist, Messergebnisse, insbesondere diesbezügliche Datenpakete (33), an die Verpackungsmaschine (1, 1'), an ein ERP-System (34) und/oder an eine cloudbasierte Anwendung (35) zu übermitteln.

10. Qualitätskontrollsystem gemäß einem der vorangehenden Ansprüche, wobei das Qualitätskontrollsystem (Q) mindestens eine Verpackungsmaschine (1, 1') oder eine Verpackungslinie (L1, L2) aufweist, die dazu ausgebildet ist, auf Basis von mittels der Teststation (31) bereitgestellten Daten, insbesondere auf Basis der die Messergebnisse enthaltenen Datenpakete (33), mindestens einen daran ablaufenden Prozess anzupassen.

11. Qualitätskontrollsystem nach Anspruch 10, **dadurch gekennzeichnet, dass** das Kennzeichnungsgerät (17, 17`) in Form eines Etikettierers und/oder Druckers (18, 18') in Produktionsrichtung (R) der Verpackungsmaschine (1, 1') stromabwärts einer Siegelstation (4, 4') positioniert ist oder in Form eines Etikettierers und/oder Druckers (18 ,18') stromaufwärts der Siegelstation (4, 4') einer Oberfolientransporteinrichtung (12) zugeordnet ist.

12. Qualitätskontrollsystem nach Anspruch 11, **dadurch gekennzeichnet, dass** die Verpackungsmaschine (1, 1') eine Steuereinrichtung (14, 14') aufweist, die dazu ausgebildet ist, auf Basis der ihr mittels der Teststation (31) vorgehaltenen Datenpakete (33) mindestens einen Prozessparameter für einen Evakuierungsvorgang und/oder einen Begasungsvorgang selbststeuernd anzupassen.

13. Qualitätskontrollsystem nach Anspruch 11 oder 12, **dadurch gekennzeichnet, dass** die Verpackungsmaschine (1 ,1') eine Steuereinrichtung (14, 14') aufweist, die dazu ausgebildet ist, auf Basis der ihr mittels der Teststation (31) vorgehaltenen Datenpakete (33) ein Intervall für eine Stichprobenbestimmung zu variieren.

14. Qualitätskontrollsystem nach einem der Ansprüche 11 bis 13, **dadurch gekennzeichnet, dass** die Verpackungsmaschine (1, 1') eine Ausschleusvorrichtung (36) aufweist, mittels welcher die gekennzeichneten Stichproben (22) aus einem Produktionsfluss hergestellter Verpackungen (V) für Testzwecke aussonderbar sind.

15. Verfahren zur automatisierten Stichprobenbestimmung von mittels einer Verpackungsmaschine (1, 1') hergestellten Verpackungen (V, T) zum Zwecke einer laserbasierten Qualitätskontrolle (32) einer in den Verpackungen (V, T) eingeschlossenen Atmosphäre.

16. Verfahren nach Anspruch 15, **dadurch gekennzeichnet, dass** an der Verpackungsmaschine (1 ,1') im Durchlauf als Stichproben (22) gekennzeichnete Verpackungen (V, T) einer gesondert von der Verpackungsmaschine (1, 1') ausgebildeten Teststation (31) zugeführt werden, innerhalb welcher die laserbasierte Qualitätskontrolle (32) durchgeführt wird, wobei die damit erzielbaren Messergebnisse als Bestandteil von Datenpaketen (33) der Verpackungsmaschine (1, 1') gemeldet werden.
